# EUROPÄISCHE PATENTANMELDUNG

(11) **EP 3 385 916 A1**
(43) Veröffentlichungstag der Anmeldung: **10.10.2018**
(21) Anmeldenummer: 18162096.4
(22) Anmeldetag: 15.03.2018
(51) Int. Cl.: G06T 17/00, G01B 11/24, G01B 11/25

(54) **MESSGERÄT UND KORRESPONDIERENDES MESSVERFAHREN**

(30) Priorität: 05.04.2017 DE 102017107336
(71) Anmelder: Testo SE & Co. KGaA, 79853 Lenzkirch (DE)
(72) Erfinder: Evers-Senne, Jan-Friso, 79822 Titisee-Neustadt (DE); Wulff, Robert, 79098 Freiburg (DE); Wolters, Dominik, 24220 Flintbek (DE)
(74) Vertreter: Börjes-Pestalozza, Henrich

(57) **Zusammenfassung**

Die Erfindung betrifft ein Messgerät (1) zur Messung wenigstens einer geometrischen Größe (h) und ein korrespondierendes Messverfahren. Das Messgerät (1) ist vorzugsweise als Handgerät zum Erstellen eines Aufmaßes eines Untersuchungsobjekts (3) ausgebildet. Das erfindungsgemäße Messverfahren zeichnet sich dadurch aus, dass aus einer, vorzugsweise mit einer Kamera (5) aufgenommenen Bilderfolge sowohl robuste Merkmale (9) als auch hiervon regelmäßige zu unterscheidende präzise Merkmale (13) detektiert werden, so dass ein robustes 3D-Modell erstellt wird und präzise Informationen über die zu messende geometrische Größe (h) berechnet werden (vgl. Fig. 6).

## Beschreibung

Die Erfindung betrifft ein Messgerät zur Messung wenigstens einer geometrischen Größe eines Untersuchungsobjektes.

Bei der gemessenen geometrischen Größe kann es sich beispielsweise um ein Längen- oder Flächenmaß eines charakteristischen Merkmals des Untersuchungsobjektes, etwa eines Gebäudes, handeln.

Das Messgerät weist erfindungsgemäß eine Kamera auf, mit der eine Aufnahme einer Folge von Bildern des Untersuchungsobjektes durchführbar ist. Hierbei kann es nützlich sein, zwischen den Einzelaufnahmen der Bilder die Position der Kamera zu verändern, um das Untersuchungsobjekt aus unterschiedlichen Blickwinkeln aufzunehmen.

Weiter umfasst das Messgerät eine Datenverarbeitungseinrichtung, die zu einer computergestützten Detektion von robusten Merkmalen mittels einer Merkmalserkennung aus den Bildern der Folge eingerichtet ist. Die robusten Merkmale zeichnen sich dadurch aus, dass sie zu einer Identifikation von inhaltlich korrespondierenden Bildbereichen zwischen den Bildern der Folge geeignet sind. Die robusten Merkmale können beispielsweise durch eine Eigenschaft einer Kontur oder einer Fläche gebildet sein, beispielsweise eine Farbe oder ein Kontrast. Ein unmittelbarer Bezug zu der zu messenden Größe braucht hierbei nicht zu bestehen.

Ferner ist das Messgerät zu einer computergestützten Identifikation von korrespondierenden Bildbereichen zwischen den Bildern mittels der detektierten robusten Merkmale und computergestützten Generierung eines 3D-Modells aus dem Ergebnis der Identifikation eingerichtet.

Die Erfindung betrifft weiter ein Messverfahren zur Messung wenigstens einer geometrischen Größe an einem Untersuchungsobjekt, mit den Schritten
- Aufnahme einer Folge von Bildern des Untersuchungsobjekts,
- computergestützte Detektion von robusten Merkmalen mittels einer Merkmalserkennung aus den Bildern der Folge, wobei die robusten Merkmale zu einer Identifikation von inhaltlich korrespondierenden Bildbereichen zwischen den Bildern der Folge geeignet sind,
- computergestützte Identifikation von korrespondierenden Bildbereichen zwischen den Bildern mittels der extrahierten robusten Merkmale und computergestützte Generierung eines 3D-Modells aus dem Ergebnis der Identifikation.

Das Messgerät kann erfindungsgemäß als Aufmaßgerät ausgebildet sein oder bezeichnet werden.

Messgeräte und Verfahren mit den eingangs beschriebenen Merkmalen sind vorgeschlagen worden, um Aufmaßmessungen möglichst einfach durchzuführen.

Ein Aufmaß eines Objektes, insbesondere eines Gebäudes wird benötigt, um beispielsweise Handwerkerleistungen zu kalkulieren. Beim Aufmaß werden die Abmessungen aller relevanten Bauteile und Anbauten gemessen.

Dies erfolgt in der Regel manuell mit einem Maßstab oder einem Maßband oder mit Hilfe eines Laserdistanzmessgeräts. Eine solche manuelle Aufnahme eines Aufmaßes kann äußerst aufwendig sein. Zudem kann es bei größeren Objekten, etwa bei mehrgeschossigen Gebäuden, notwendig sein, ein Gerüst zu installieren, um etwa oben liegende Fenster zu vermessen.

Um diesen hohen Aufwand zu reduzieren, könnte ein Messgerät wie eingangs beschrieben verwendet werden. Allerdings hat der Benutzer hierbei weiterhin im 3D-Modell manuell Punkte oder dergleichen auszuwählen, zu denen die geometrische Größe berechnet werden soll. Dies ist weiterhin zeitaufwändig und verlangt darüber hinaus viel Erfahrung. Außerdem kann das Ergebnis mit hohen Messungenauigkeiten behaftet sein.

Der Erfindung liegt die Aufgabe zugrunde, Aufmaßmessungen zu vereinfachen.

Zur Lösung der Aufgabe sind erfindungsgemäß die Merkmale des Anspruchs 1 vorgesehen. Insbesondere wird somit zur Lösung der genannten Aufgabe erfindungsgemäß bei einem Messgerät der eingangs beschriebenen Art vorgeschlagen, dass die Datenverarbeitungseinrichtung zu einer computergestützten Detektion von präzisen Merkmalen mittels einer Ecken- und/oder Kantendetektion aus den Bildern der Folge eingerichtet ist.

Bei den präzisen Merkmalen kann es sich insbesondere um genau lokalisierbare Merkmale in den Bildern der Folge handeln, welche nicht notwendigerweise auch zur Zuordnung korrespondierender Bildbereiche zwischen den Bildern der Folge geeignet sein müssen. Es kann vorteilhaft sein, wenn die präzisen Merkmale für die Berechnung der geometrischen Größe erforderlich oder zumindest dienlich sind. Als präzise Merkmale kommen beispielsweise Punktmerkmale, insbesondere als Schnittpunkte von Linien und/oder Linienmerkmale in Betracht. Solche Merkmale können zum Beispiel von einer Umrahmung einer Fenstereinfassung gebildet sein, welche Ecken und gerade oder gekrümmte Ränder umfasst.

Die bei der Erfindung verwendeten robusten Merkmale können beispielsweise dadurch charakterisiert sein, dass sie skaleninvariante Merkmalen sind. Dies ermöglicht eine Identifikation von korrespondierenden Bildinhalten unabhängig beispielsweise von einem Aufnahmeabstand. Die bei der Erfindung verwendeten präzisen Merkmale können dagegen beispielsweise dadurch charakterisiert sein, dass sie eine pixelgenaue oder sogar subpixelgenaue Lokalisierung im jeweiligen Bild erlauben. Derartige präzise Merkmale sind besonders geeignet bei der erfindungsgemäßen Gewinnung einer geometrischen Größe, bei der die präzisen Merkmale die geometrische Größe definieren. Allgemein kann gesagt werden, dass bei einer Ausgestaltung der Erfindung die robusten Merkmale eine größere Wahrscheinlichkeit einer Identifikation in einem weiteren Bild erlauben, während die präzisen Merkmale eine genauere Lokalisierung des Merkmals im einzelnen Bild erlauben.

Die oben genannte Lösung sieht ferner vor, dass Auswahlmittel zu einer Auswahl eines Satzes von präzisen Merkmalen ausgebildet sind und dass die Datenverarbeitungseinrichtung zu einer computergestützten Berechnung der geometrischen Größe aus dem Satz von präzisen Merkmalen in dem 3D-Modell eingerichtet ist. Die Auswahl kann hierbei alle oder einen Teil der detektierten präzisen Merkmale umfassen.

Durch diese technische Lösung werden Aufmaßmessungen vereinfacht, da sie ein manuelles Auswählen von für die Berechnung der geometrischen Größe benötigten präzisen Merkmalen entbehrlich macht. Die Vorteile der Verwendung von robusten, aber möglicherweise unpräzisen, und zugleich präzisen, aber möglicherweise nicht robusten Merkmalen werden bei der vorliegenden Erfindung in optimaler Weise miteinander kombiniert.

Bei einer Ausgestaltung der Erfindung kann vorgesehen sein, dass die Detektion der präzisen Merkmale aus Kantendetektion, insbesondere Geraden- oder Streckendetektion, und anschließender Schnittpunktberechnung erfolgt. Kanten sind in einem Bild genauer detektierbar, so dass durch die Schnittpunktbildung die Präzision der präzisen Merkmale erhöht wird.

Bei einer Ausgestaltung der Erfindung kann vorgesehen sein, dass das Messgerät als Handgerät ausgebildet ist, vorzugsweise mit integrierter Kamera und/oder integrierter Datenverarbeitungseinrichtung. Es kann allerdings auch vorgesehen sein, dass das Handgerät lediglich Mittel zur Übertragung von Daten von einer externen Kamera hat. Besonders vorteilhaft kann es sein, wenn eine Energieversorgungseinheit für die Kamera und/oder für die Datenverarbeitungseinrichtung integriert ist. Ein derartiges Handgerät bietet den Vorteil, dass es unkompliziert von jedermann unmittelbar am Einsatzort verwendbar ist.

Zur Verbesserung der Messgenauigkeit kann bei einer Ausgestaltung der Erfindung vorgesehen sein, dass Belichtungsparameter der Kamera steuerbar sind oder gesteuert werden. Bevorzugt basiert die Steuerung auf einem aufgenommenen Bild eines Referenzobjekts, insbesondere auf Grauwerten in diesem Bild. Es kann vorgesehen sein, dass Bildhelligkeiten in der Folge von Bildern angeglichen werden zur Korrektur von Ungenauigkeiten der Kamera oder der Belichtungssteuerung. Weiter kann vorgesehen sein, dass die Kamera einen großen Öffnungswinkel hat und/oder ein Fischaugenobjektiv umfasst und/oder Mittel zur Abbildung und/oder Ausgabe intrinsischer Kameraparameter und/oder sonstiger Informationen hat.

Zur weiteren Verbesserung der Messgenauigkeit kann bei einer weiteren Ausgestaltung der Erfindung vorgesehen sein, dass das Messgerät oder die Kamera ausgebildet ist, eine Ausrichtung des Messgeräts und/oder der Kamera, insbesondere mittels eine Schwerkraftsensors und/oder Kompasses, eine Drehrate und/oder Beschleunigung der Kamera oder des Messgeräts und/oder eine Umgebungstemperatur aufzuzeichnen. In einem korrespondierenden Messverfahren kann vorgesehen sein, dass eine Richtung einer Schwerkraft, Himmelsrichtung, Drehrate, Beschleunigung oder Temperatur aufgenommen wird. Eine Kenntnis über eine Ausrichtung des Messgeräts oder der Kamera kann beispielsweise verwendet werden, um das generierte 3D-Modell auszurichten. Eine Kenntnis über die Umgebungstemperatur kann beispielsweise verwendet werden, um eine thermische Ausdehnung eines Referenzobjekts zu berechnen, um somit genauere Skalierungsdaten zu erhalten.

Um das Auswertungsergebnis zu verbessern, kann bei einer weiteren Ausgestaltung der Erfindung vorgesehen sein, dass die Datenverarbeitungseinrichtung zu einer Berechnung von 3D-Koordinaten im 3D-Modell zumindest für den Satz von präzisen Merkmalen eingerichtet ist. Dies kann durch Triangulation aus den geometrischen Koordinateninformationen des 3D-Modells erfolgen. Eine verbesserte Berechnung kann erfolgen, wenn alternativ oder zudem korrespondierende präzise Merkmale aus mehreren Bildern der Folge zugeordnet werden, beispielsweise unter Verwendung von Deskriptoren und/oder Kamerainformationen, wie etwa über eine Epipolargeometrie oder über extrinsische oder intrinsische Kameraparameter, und/oder Nachbarschaftsbeziehungen zu anderen präzisen und/oder robusten Merkmalen.

Zur Vereinfachung der Bedienung des Messgeräts und/oder zur Übermittlung von Informationen kann bei einer weiteren Ausgestaltung vorgesehen sein, dass Mittel zur Ausgabe von Informationen, vorzugsweise ein Display, vorgesehen sind. Das Messgerät kann beispielsweise eingerichtet sein, ein aufgenommenes oder registriertes Bild, robuste oder präzise Merkmale, ein generiertes 3D-Modell, einen Abstand zum Untersuchungsobjekt oder zu einem Referenzobjekt, eine Größe des Untersuchungsobjekts, eine gemessene geometrische Größe, eine Genauigkeit der gemessenen geometrischen Größe, eine Position und/oder Genauigkeit der Position einer berechneten 3D-Koordinate eines Merkmals, oder andere für den Benutzer möglicherweise relevante Informationen anzuzeigen.

Um die Interaktion mit dem Messgerät zu vereinfachen, kann bei einer weiteren Ausgestaltung der Erfindung vorgesehen sein, dass die Auswahlmittel zu einer Ausgabe der extrahierten präzisen Merkmale für einen Benutzer eingerichtet sind. Hierbei kann insbesondere vorgesehen sein, dass die Auswahlmittel ein Display aufweisen. Bevorzugt ist das Display berührempfindlich und/oder mit einem steuerbaren Cursor ausgerüstet. Es kann vorteilhaft sein, wenn das Messgerät zur Ausgabe der präzisen Merkmale in einer 2D-Ansicht und/oder 3D-Ansicht eingerichtet ist.

Bei einer weiteren Ausgestaltung der Erfindung kann vorgesehen sein, dass die Datenverarbeitungseinrichtung zu einer Einpassung eines geometrischen Objekts in die 3D-Koordinaten des Satzes von präzisen Merkmalen für die Berechnung der geometrischen Größe eingerichtet ist. Bei dem geometrischen Objekt kann es sich beispielsweise um ein Rechteck, eine Pyramide, einen Kreisbogenschnitt oder um jede sonstige beliebige Form handeln. Es kann vorteilhaft sein, wenn die Datenverarbeitungseinrichtung zu einer Ermittlung und Ausgabe von geeigneten geometrischen Objekten computergestützt zur Auswahl eingerichtet ist. Die Einpassung eines geeigneten geometrischen Objekts unterstützt den Anwender bei der Definition einer Messvorschrift und kann zu einer Erhöhung der Messgenauigkeit führen.

Um die Güte der Einpassung einschätzen zu können und hieraus Folgemaßnahmen ableiten zu können, kann bei einer Variante der soeben beschriebenen Ausgestaltung der Erfindung vorgesehen sein, dass die Datenverarbeitungseinrichtung zur Auswertung eines Ungenauigkeitsmaßes von dem eingepassten geometrischen Objekt und den 3D-Koordinaten des Satzes von präzisen Merkmalen eingerichtet ist.

Vorteilhaft kann es hierbei sein, wenn die Datenverarbeitungseinrichtung zur automatischen Einpassung eines alternativen geometrischen Objekts eingerichtet ist, wenn das ausgewertete Ungenauigkeitsmaß einen Grenzwert überschreitet. Indem das Messgerät somit bei zunächst ungenügender Auswahl eines geometrischen Objekts automatisch ein alternatives geometrisches Objekt einpasst, kann die Qualität der Einpassung verbessert werden.

Vorteilhaft kann es weiter sein, wenn die Datenverarbeitungseinrichtung zur Abgabe einer Warninformation eingerichtet ist, wenn das ausgewertete Ungenauigkeitsmaß einen Grenzwert überschreitet. Sollte keine automatische Einpassung eines alternativen geometrischen Objektes vorgesehen sein, kann dies beispielsweise den Vorteil haben, dass sodann der Anwender des Messgeräts selbst entscheiden kann, ob ein alternatives geometrisches Objekt eingepasst werden soll oder ob ergänzende Bildaufnahmen durchgeführt werden sollen. Doch auch dann, wenn eine automatische Einpassung alternativer geometrischer Objekte erfolgt ist, kann die Abgabe einer Warninformation vorteilhaft sein, da hierdurch dem Nutzer des Messgeräts beispielsweise mitgeteilt werden kann, dass die Messgenauigkeit aktuell gering ist und daher ergänzende Bildaufnahmen durchgeführt werden sollten.

Vorteilhaft kann es weiter sein, wenn die Datenverarbeitungseinrichtung eingerichtet ist, das Auswertungsergebnis des Ungenauigkeitsmaßes anzuzeigen und/oder den Grenzwert zu definieren oder zu ändern. Bevorzugt kann dies durch eine Werkseinstellung oder durch den Anwender des Messgeräts selbst erfolgen. Sodann kann entschieden werden, ob eine erfolgte Messung ausreichend zuverlässig war oder ob weitere Bilder des Untersuchungsobjekts aufgenommen werden sollten.

Zur Verbesserung der Messgenauigkeit kann bei einer weiteren Ausgestaltung der Erfindung vorgesehen sein, dass die Datenverarbeitungseinrichtung eingerichtet ist, eine Korrekturrechnung durchzuführen, bei der Informationen über die robusten Punktmerkmale und/oder die präzisen Punktmerkmale und/oder eines oder des Referenzobjekts und/oder einer Umgebungstemperatur und/oder eines Kameraparameters verwertet werden, indem eine Fehlerfunktion eingeführt ist, welche angepasste Gewichtungen und Randbedingungen für die verwerteten Informationen umfasst.

Bei einer weiteren Ausgestaltung der Erfindung kann vorgesehen sein, dass die Datenverarbeitungseinrichtung zu einer Extraktion von Deskriptoren für die robusten Merkmale zur Identifikation der korrespondierenden Bildbereiche eingerichtet ist. Die Information, welche durch die Deskriptoren bereitgestellt wird, kann nämlich insbesondere zu einer verlässlicheren Erstellung eines 3D-Modells führen, anhand dessen 3D-Koordinaten der für die Berechnung der geometrischen Größe verwendeten präzisen Merkmale berechenbar sein können.

Um die Messgenauigkeit zu verbessern, kann bei einer Ausgestaltung der Erfindung vorgesehen sein, dass die Datenverarbeitungseinrichtung zu einer Registrierung der Bilder der Folge für die Generierung des 3D-Modells eingerichtet ist. Durch die Registrierung kann nämlich das 3D-Modell besonders verlässlich sein und somit eine gute Datengrundlage für die Berechnung der geometrischen Größe bilden.

Zur Erzeugung eines möglichst genauen 3D-Modells und somit zur Verbesserung der Messgenauigkeit kann alternativ oder zusätzlich hierzu vorgesehen sein, dass die Datenverarbeitungseinrichtung zu einer Anwendung eines Structure-from-Motion-Verfahrens auf die Bilder der Folge für die Generierung des 3D-Modells eingerichtet ist.

Um die Messgenauigkeit weiter zu verbessern, kann bei einer Ausgestaltung der Erfindung vorgesehen sein, dass die Datenverarbeitungseinrichtung zu einer Extraktion von Deskriptoren der präzisen Merkmale für die Berechnung der 3D-Koordinaten des Satzes von präzisen Merkmalen eingerichtet ist. Durch die Verwendung von Deskriptoren können präzise Merkmale verschiedener Bildaufnahmen besser zugeordnet werden. Somit kann die Messgenauigkeit verbessert werden.

Zur Verbesserung der Messgenauigkeit kann bei einer Ausgestaltung der Erfindung ferner vorgesehen sein, dass die Datenverarbeitungseinrichtung zu einer Berechnung der 3D-Koordinaten anhand von fotometrischen Ähnlichkeiten der präzisen Merkmale zwischen den Bildern der Folge eingerichtet ist. Bevorzugt erfolgt die Berechnung anhand von Deskriptoren der präzisen Merkmale.

Um die Messgenauigkeit weiter zu verbessern, kann bei einer Ausgestaltung der Erfindung alternativ oder zusätzlich vorgesehen sein, dass die Datenverarbeitungseinrichtung zu einer subpixelgenauen Berechnung der 2D-Koordinaten der präzisen Merkmale in den Bildern eingerichtet ist.

Um für die geometrische Größe Absolutwerte zu erhalten, kann bei einer Ausgestaltung der Erfindung vorgesehen sein, dass eine Skalierungseinheit zu einer Skalierung des 3D-Modells durch Auswertung eines in den Bildern der Folge aufgenommenen Referenzobjekts eingerichtet ist. Bevorzugt sind hierbei Skalierungsinformationen über das Referenzobjekt messbar oder bekannt. Bei dem Referenzobjekt kann es sich beispielsweise um eine Referenztafel und/oder mindestens einen Marker handeln.

Bei einer Ausgestaltung der Erfindung kann alternativ oder zusätzlich zu der vorherigen Ausgestaltung vorgesehen sein, dass eine Skalierungseinheit, beispielsweise die zuvor bereits erwähnte Skalierungseinheit, zu einer Skalierung des 3D-Modells durch wenigstens eine Abstandsmessung zum Untersuchungsobjekt eingerichtet ist. Durch Abstandsmessungen können Skalierungsinformationen gewonnen werden, anhand derer eine Bestimmung von Absolutwerten für die zu messende geometrische Größe erfolgen kann.

Bei einer Ausgestaltung der Erfindung kann vorgesehen sein, dass die Datenverarbeitungseinrichtung zur Berechnung einer Kamerapose für ein Bild aus der Folge von Bildern eingerichtet ist, insbesondere wobei in dem Bild ein Referenzobjekt aufgenommen ist.

Zur Lösung der genannten Aufgabe sind außerdem erfindungsgemäß die Merkmale des nebengeordneten, auf ein Messverfahren gerichteten Anspruchs vorgesehenen. Insbesondere werden somit zur Lösung der genannten Aufgabe erfindungsgemäß bei einem Messverfahren der eingangs beschriebenen Art die folgenden weiteren Schritte vorgeschlagen:
- computergestützte Detektion von präzisen Merkmalen mittels einer Ecken- und/oder Kantendetektion aus den Bildern der Folge,
- Auswahl eines Satzes von präzisen Merkmalen und
- computergestützte Berechnung der geometrischen Größe aus dem Satz von präzisen Merkmalen in dem 3D-Modell.

Dieses Messverfahren weist somit technische Merkmale auf, welche zu den technischen Merkmalen korrespondieren können, welche das oben beschriebene erfindungsgemäße Messgerät aufweist. Das Messverfahren teilt somit insbesondere die Vorteile, welche auch das Messgerät hat gegenüber dem vorbekannten Stand der Technik. Insoweit wird auf die Vorteilsbeschreibung nach oben verwiesen.

Im Folgenden werden Ausgestaltungen des erfindungsgemäßen Messverfahrens beschrieben. Bis auf wenige Ausnahmen korrespondieren diese Ausgestaltungen zu den bereits oben beschriebenen Ausgestaltungen des erfindungsgemäßen Messgeräts und weisen daher insbesondere die gleichen Vorteile auf, welche korrespondierende Ausgestaltungen des Messgeräts aufweisen. Bezüglich der Vorteilsbeschreibung der im Folgenden beschriebenen Ausgestaltungen des Messverfahrens wird daher auf die Vorteilsbeschreibung der korrespondierenden Ausgestaltungen des Messgeräts verwiesen.

Bei einer Ausgestaltung der Erfindung kann vorgesehen sein, dass die präzisen Merkmale als Schnittpunkte von Kanten einer Kantendetektion, insbesondere Geraden- oder Streckendetektion, ermittelt werden. Dies hat insbesondere den Vorteil, dass Kanten in einem Bild wesentlich präziser ermittelt werden können und somit auch die als Schnittpunkt erhaltenen präzisen Punktmerkmale genauer lokalisiert sind. Bei einer Ausgestaltung der Erfindung kann vorgesehen sein, dass zumindest für den Satz von präzisen Merkmalen zugehörige 3D-Koordinaten im 3D-Modell computergestützt berechnet werden. Bevorzugt kann dies kann wie bereits oben beschrieben erfolgen.

Bei einer weiteren Ausgestaltung der Erfindung kann vorgesehen sein, dass Informationen ausgegeben werden. Dies kann beispielsweise über ein Display erfolgen. Bei den ausgegebenen Informationen kann es sich insbesondere um die bereits oben beschriebenen Informationen handeln.

Bei einer Ausgestaltung der Erfindung kann vorgesehen sein, dass die detektierten präzisen Merkmale für einen Benutzer zur Auswahl ausgegeben werden. Hierbei und auch generell kann vorgesehen sein, dass der Benutzer alle präzisen Merkmale auswählen kann oder auch nur einen Teil der detektierten präzisen Merkmale.

Bei einer Ausgestaltung der Erfindung kann vorgesehen sein, dass zur Berechnung der geometrischen Größe ein geometrisches Objekt in die 3D-Koordinaten des Satzes von präzisen Merkmalen computergestützt eingepasst wird. Insbesondere kann hierbei vorgesehen sein, dass geeignete geometrische Objekte computergestützt ermittelt und einem Benutzer zur Auswahl angeboten werden.

Bei einer Ausgestaltung der Erfindung kann vorgesehen sein, dass ein Ungenauigkeitsmaß, insbesondere ein Abstandsmaß, von dem eingepassten geometrischen Objekt und den 3D-Koordinaten des Satzes von präzisen Merkmalen ausgewertet wird, insbesondere wobei eine Warninformation abgegeben wird oder automatisch ein alternatives geometrisches Objekt eingepasst wird, wenn das ausgewertete Ungenauigkeitsmaß einen Grenzwert überschreitet.

Es kann vorteilhaft sein, wenn das Auswertungsergebnis des Ungenauigkeitsmaßes für den Anwender des Messverfahrens erkennbar angezeigt wird. Alternativ oder zusätzlich kann vorgesehen sein, dass eine Werkeinstellung und/oder der Benutzer den Grenzwert definiert oder ändert.

Bei einer Ausgestaltung der Erfindung kann vorgesehen sein, dass eine Korrekturrechnung wie oben beschrieben durchgeführt wird.

Bei einer Ausgestaltung der Erfindung kann vorgesehen sein, dass zur Identifikation der korrespondierenden Bildbereiche Deskriptoren für die robusten Merkmale computergestützt extrahiert werden.

Bei einer Ausgestaltung der Erfindung kann vorgesehen sein, dass zur Generierung des 3D-Modells die Bilder der Folge computergestützt in Registrierung gebracht werden.

Alternativ oder zusätzlich hierzu kann vorgesehen sein, dass zur Generierung des 3D-Modells ein computergestütztes Structure-from-Motion-Verfahren auf die Bilder der Folge angewendet wird.

Bei einer Ausgestaltung der Erfindung kann vorgesehen sein, dass zur Berechnung der 3D-Koordinaten des Satzes von präzisen Merkmalen Deskriptoren der präzisen Merkmale computergestützt extrahiert werden.

Bei einer Ausgestaltung der Erfindung kann vorgesehen sein, dass die 3D-Koordinaten anhand von fotometrischen Ähnlichkeiten der präzisen Merkmale zwischen den Bildern der Folge berechnet werden. Bevorzugt geschieht dies anhand von Deskriptoren der präzisen Merkmale.

Bei einer Ausgestaltung der Erfindung kann vorgesehen sein, dass die 2D-Koordinaten der Bildpositionen der präzisen Merkmale subpixelgenau berechnet werden.

Bei einer Ausgestaltung der Erfindung kann vorgesehen sein, dass als präzise Merkmale Punktmerkmale verwendet werden. Alternativ oder zusätzlich kann vorgesehen sein, dass als präzise Merkmale Linienmerkmale verwendet werden. Linienmerkmale lassen sich besonders präzise bestimmen und definieren häufig bei Untersuchungsobjekten interessante geometrische Größen. Aus dem Schnitt dieser Linienmerkmale können präzise Punktmerkmale entstehen. Diese Art von Merkmalen eignen sich daher besonders gut als präzise Merkmale, so dass eine Vielzahl relevanter und genauer geometrischer Größen gemessen werden können.

Bei einer Ausgestaltung der Erfindung kann vorgesehen sein, dass eine Skalierung des 3D-Modells durch Auswertung eines in den Bildern der Folge aufgenommenen Referenzobjekts computergestützt berechnet wird.

Alternativ oder zusätzlich hierzu kann vorgesehen sein, dass eine Skalierung des 3D-Modells durch wenigstens eine Abstandsmessung zum Untersuchungsobjekt computergestützt berechnet wird.

Die Erfindung wird nun anhand eines oder einiger weniger Ausführungsbeispiele näher beschrieben, ist jedoch nicht auf diese wenigen Ausführungsbeispiele beschränkt. Weitere Ausführungsbeispiele ergeben sich durch Kombination der Merkmale einzelner oder mehrerer Schutzansprüche untereinander und/oder mit einzelnen oder mehreren Merkmalen der Ausführungsbeispiele.

Es zeigt:
- Fig. 1: eine Perspektive eines erfindungsgemäßen Messgeräts, mit dem wenigstens eine geometrische Größe eines Untersuchungsobjektes gemessen werden kann;
- Fig. 2: das in Fig. 1 gezeigte Messgerät aus einer anderen Perspektive
- Fig. 3: ein Flussdiagramm eines erfindungsgemäßen Messverfahrens zur Messung wenigstens einer geometrischen Größe;
- Fig. 4: eine zu vermessende Hausfassade mit einer Auswahl von detektierten robusten Merkmalen;
- Fig. 5: die in Fig. 4 gezeigte Hausfassade mit einer Auswahl von detektierten präzisen Merkmalen;
- Fig. 6: eine Illustration zur Berechnung einer Höhe eines Fensters der in Fig. 4 und Fig. 5 gezeigten Hausfassade,
- Fig. 7: eine Seitenansicht einer zweiten Ausführung eines erfindungsgemäßen Messgeräts und
- Fig. 8: eine Vorderansicht des Messgeräts der Fig. 7.

Bei der nachfolgenden Beschreibung verschiedener Ausführungsbeispiele der Erfindung erhalten in ihrer Funktion übereinstimmende Elemente auch bei abweichender Gestaltung oder Formgebung übereinstimmende Bezugszahlen.

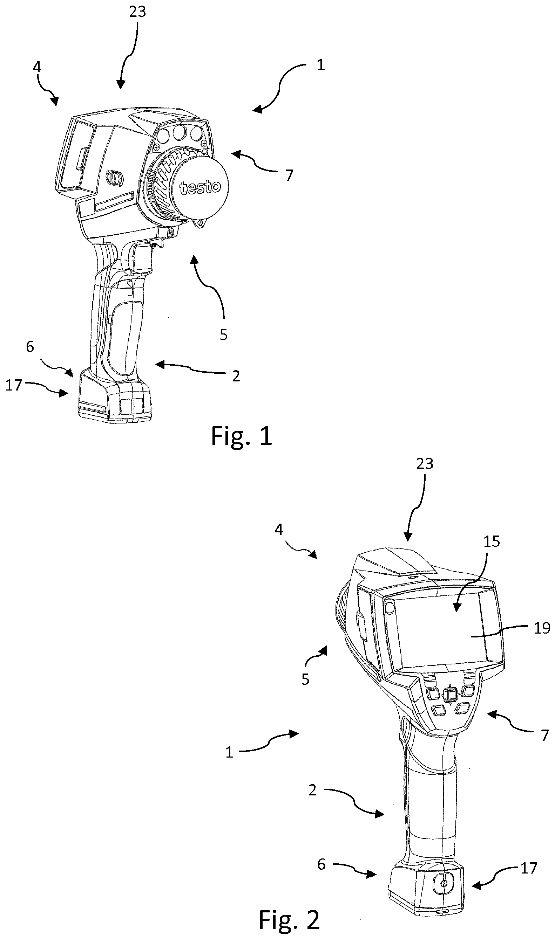

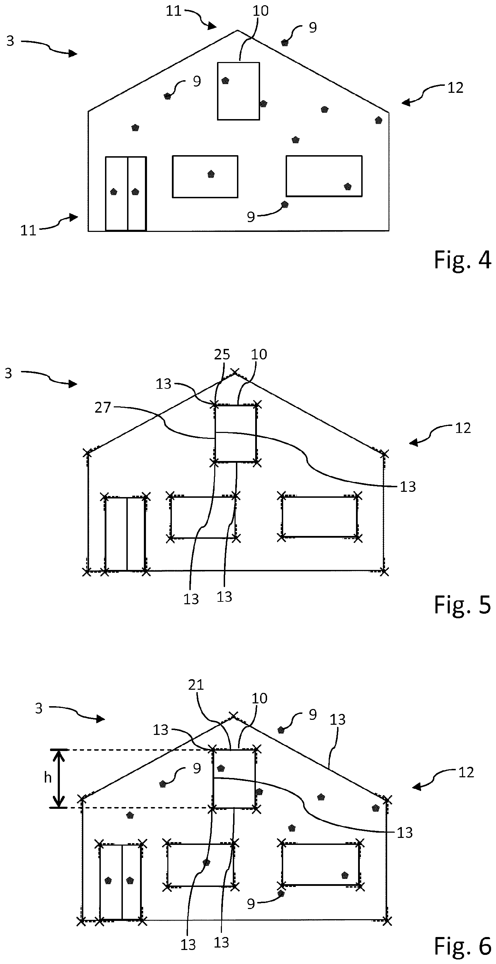

Fig. 1 und Fig. 2 zeigen unterschiedliche Perspektiven eines erfindungsgemäßen Messgeräts 1. Mit dem Messgerät 1 können geometrische Größen eines Untersuchungsobjektes gemessen werden. Besonders geeignet ist das Messgerät 1 als Aufmaßgerät, mit dem Aufmaße von Gebäuden erstellt werden können, beispielsweise das Aufmaß der in Fig. 4 bis Fig. 6 gezeigten Hausfassade 12. Bei dem Messgerät 1 handelt es sich um ein Handgerät mit einem ergonomisch ausgebildeten Griffbereich 2 zum Greifen, Halten und Bedienen des Handgeräts. Die äußere Gestaltung und/oder der innere Aufbau des Messgeräts 1 können bei weiteren Ausführungsbeispielen von dem hier gezeigten abweichen.

An dem Kopf 4 des Messgeräts 1 ist eine Kamera 5 ausgebildet, mit der Folgen von Bildern des Untersuchungsobjekts 3 aufnehmbar sind. Zur Erstellung einer Bilderfolge kann der Anwender des Messgeräts 1, beispielsweise ein Handwerker, aus unterschiedlichen Positionen Bilder des Untersuchungsobjekts 3 aufnehmen. Die aufgenommen Bilderdaten werden sodann zwischengespeichert und an eine Datenverarbeitungseinrichtung 7 gesendet, welche in dem Kopf 4 des Messgeräts angeordnet ist. Ferner ist an dem Kopf 4 ein Display 19 ausgebildet, auf dem von der Datenverarbeitungseinrichtung 7 verarbeitete und ausgegebene Ausgabedaten je nach Einstellung in 2D- oder 3D-Ansicht abbildbar sind. Das Display 19 ist berührungsempfindlich, so dass eine Interaktion mit den abgebildeten Ausgabedaten möglich ist. Insbesondere können durch Berührung des Displays 19 angezeigte Bildpunkte und Linien, welche präzise Merkmale 13 bilden können, ausgewählt werden. Insoweit handelt es sich bei dem Display 19 somit um ein Auswahlmittel 15, welches insbesondere zu einer Auswahl eines Satzes von präzisen Merkmalen 13 ausgebildet ist.

An dem Fuß 6 oder Griff des Messgeräts 1 ist eine einen Akkumulator bildende Energieversorgungseinheit 17 ausgebildet. Die Energieversorgungseinheit 17 versorgt die Kamera 5 und die Datenverarbeitungsanlage 7 mit dem für den Betrieb benötigten elektrischen Strom.

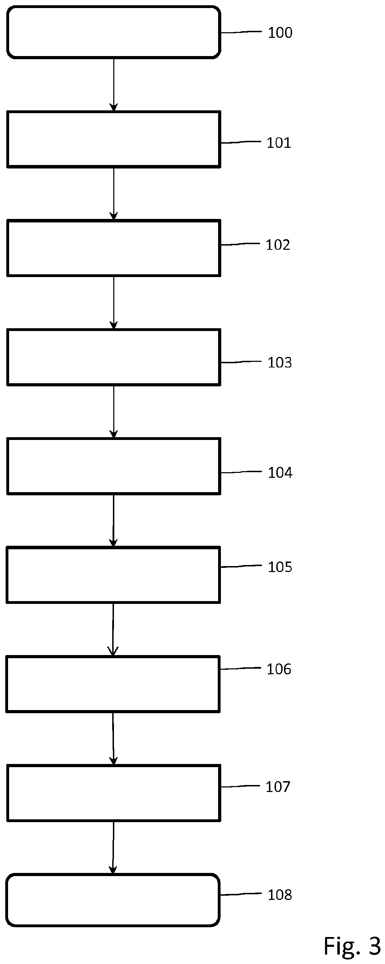

Fig. 3 zeigt ein Flussdiagramm eines erfindungsgemäßen Messverfahrens. Wichtige Teilschritte des Messverfahrens sind wie weiter unten genauer erläutert in Fig. 4 bis Fig. 6 anhand einer konkreten Messsituation illustriert. Mit dem Messverfahren werden geometrische Größen eines Untersuchungsobjekts 3 gemessen. Das in Fig. 3 gezeigte Messverfahren kann beispielsweise mit dem in Fig. 1 und Fig. 2 gezeigten Messgerät 1 ausgeführt werden. Das Messgerät 1 und dessen Datenverarbeitungseinrichtung 7 sind hierzu entsprechend eingerichtet.

Das Verfahren wird zunächst in Schritt 100 initialisiert. Dies kann beispielsweise durch Einschalten eines am Messgerät 1 ausgebildeten, in Fig. 1 und Fig. 2 nicht näher dargestellten, Anschaltknopfes erfolgen.

Sodann wird in Schritt 101 eine Folge von Bildern des Untersuchungsobjekts 3 aufgenommen. Hierzu können beispielsweise mit dem Messgerät 1 eine Vielzahl von Bildern jeweils von unterschiedlichen Positionen aus aufgenommen werden. Hierzu muss sich der Anwender lediglich an unterschiedliche Orte begeben und von diesen Orten aus jeweils ein Bild des Untersuchungsobjekts 3 aufnehmen.

In Schritt 102 werden sodann robuste Merkmale 9 (vgl. Fig. 4), wie beispielsweise eine sich vom Hintergrund abhebende Farbe einer Fläche, computergestützt detektiert. Dies erfolgt mittels einer Merkmalserkennung aus den in Schritt 101 aufgenommenen Bildern der Folge. Hierzu kann beispielsweise ein SURF-(Speeded Up Robust Features)-Algorithmus oder auch ein SIFT-(Scale-invariant feature transform)-Algorithmus angewandt werden.

In Schritt 103 werden sodann mittels der in Schritt 102 extrahierten robusten Merkmale 9, insbesondere unter Verwendung von Deskriptoren für die robusten Merkmale 9, korrespondierende Bildbereiche 11 zwischen den Bildern computergestützt identifiziert und aus dem Ergebnis der Identifikation wird sodann ein 3D-Modell computergestützt generiert. Hierfür können insbesondere Bildregistrierungsverfahren zum Einsatz kommen. Geeignet ist beispielsweise auch ein unter der Bezeichnung Structure-from-Motion-Verfahren bekannter Algorithmus.

In Schritt 104 werden sodann aus der in Schritt 101 aufgenommenen Folge von Bildern präzise Merkmale 13 (vgl. Fig. 5), wie beispielsweise ein Punktmerkmal (bspw. eine Ecke eines Fensters) oder ein Linienmerkmal (bspw. eine Kante einer Hauswand), computergestützt detektiert mittels eines Verfahrens zur Detektion von Ecken und/oder Kanten. Hierzu kann beispielsweise ein Harris-Corner-Detektor-Algorithmus verwendet werden und/oder ein unter der Bezeichnung *Good-Features-To-Track* bekannter Algorithmus. Zur Kantendetektion kann neben anderen beispielsweise der ed-lines Algorithmus verwendet werden.

In Schritt 105 werden die präzisen Merkmale zwischen den Bildern zugeordnet und ihre 3D-Koordinaten berechnet, so dass sie in das dreidimensionale Modell eingepasst werden können. Somit stehen die präzisen Merkmale in dem Modell zur weiteren Verwendung zur Verfügung.

In Schritt 106 wird sodann aus den in Schritt 104 detektierten präzisen Merkmalen 13 ein Satz von präzisen Merkmalen 13 ausgewählt. Hierzu können insbesondere die in Schritt 104 detektierten präzisen Merkmale 13 für den Anwender des Messverfahrens zur Auswahl ausgegeben werden, beispielsweise auf dem Display 19 des Messgeräts 1. Eine Auswahl kann sodann beispielsweise mit Hilfe eines steuerbaren Cursors erfolgen oder auch durch Verwendung einer Touch-Screen-Technologie.

In Schritt 107 wird schließlich die erwünschte geometrische Größe h (beispielsweise eine Länge oder ein Flächeninhalt) aus dem in Schritt 106 ausgewählten Satz von präzisen Merkmalen 13 computergestützt in dem 3D-Modell berechnet. Hierzu können insbesondere zunächst für den in Schritt 106 ausgewählten Satz von präzisen Merkmalen 13 zugehörige 3D-Koordinaten im 3D-Modell computergestützt, vorzugsweise subpixelgenau, berechnet werden, insbesondere unter Verwendung von Deskriptoren der präzisen Merkmale 13 und/oder von fotometrischen Ähnlichkeiten zwischen den Bildern der Folge. Dies erlaubt insbesondere auch das automatische oder vom Anwender ausgewählte Einpassen eines geeigneten geometrischen Objekts 21. Dies kann, wie bereits oben genauer beschrieben, auf unterschiedliche Weise erfolgen. Zur Kontrolle kann ein Ungenauigkeitsmaß ausgewertet werden, woran sich Folgemaßnahmen anschließen können, wie bereits oben genauer beschrieben.

In Schritt 108 wird das Verfahren beendet, insbesondere durch Ausschalten des Messgeräts 1. Es kann aber zur neuen Auswahl weiterer präziser Merkmale zur Berechnung weiterer Messgrößen zu Schritt 106 gesprungen werden.

Vor Beendigung des Verfahrens in 108 kann ein nicht explizit dargestellter weiterer Verfahrensschritt ausgeführt werden, in dem das 3D-Modell mittels eines Referenzobjekts und/oder einer Abstandsmessung skaliert wird.

Im Folgenden wird beispielhaft anhand einer konkreten, in Fig. 4 bis Fig. 6 dargestellten Messsituation die Messung einer geometrischen Größe h mittels eines Ausführungsbeispiels des erfindungsgemäßen Messverfahrens unter Verwendung des in Fig. 1 und Fig. 2 gezeigten Messgeräts 1 beschrieben.

Konkret wird wie folgt dargestellt, wie - neben anderen gemessenen geometrischen Größen - die in Fig. 6 mit dem Buchstaben "h" gekennzeichnete Höhe h des oberen Fensters 10 der Hausfassade 12 (vgl. Fig. 4 bis Fig. 6) bestimmt werden kann.

Zunächst wird mit der Kamera 5 des Messgeräts 1 aus unterschiedlichen Perspektiven eine Folge von Bildern der Hausfassade 12 aufgenommen.

Die Datenverarbeitungseinrichtung 7 ermittelt sodann aus der Bilderfolge mittels eines geeigneten Algorithmus, wie etwa SIFT oder SURF, robuste Merkmale, welche in Fig. 4 und Fig. 6 dargestellt sind und teilweise mit der Bezugsziffer 9 versehenen sind. Die Bilder werden sodann mittels Bildregistrierung in Übereinstimmung gebracht und ein 3D-Modell wird berechnet.

Weiter werden präzise Merkmale, welche in Fig. 5 und Fig. 6 dargestellt sind und teilweise mit der Bezugsziffer 13 versehen sind, durch Ecken- und Kantendetektion ermittelt und auf dem Display 19 angezeigt. Aus Fig. 5 ist erkennbar, dass hierdurch insbesondere die Ecken und Begrenzungslinien der Hausfassade 12, der Fenster, darunter das obere Fenster 10, und der Tür detektiert werden.

Da der Benutzer an der Höhe h des oberen Fensters 10 interessiert ist, wählt er sodann über das berührungsempfindliche Display 19 den von dem oberen Fenster 10 umfassten Satz von präzisen Merkmalen 13 aus, indem er das Display 19 an dem Ort des Fensters 10 mit dem Finger berührt. Aus dem 3D-Modell werden sodann entsprechende 3D-Koordinaten der ausgewählten präzisen Merkmale 13 berechnet. Infolge der Berührung des Diplays 19 am Ort des Fenster 10 wird dem Benutzer vorgeschlagen, ein Rechteck in das von den ausgewählten präzisen Merkmalen 13 umfasste Fenster 10 einzupassen. Folgt der Benutzer diesem Vorschlag, berechnet das Messgerät 1 die geometrischen Größen, die das einzupassende Rechteck charakterisieren. Zu den so ermittelten Werten gehört auch die Höhe h des Fensters 10, welche neben anderen Kenngrößen auf dem Display 19 wiedergegeben wird. Der Benutzer kann auch ein anderes geometrisches Objekt wählen, das eingepasst werden soll, beispielsweise ein Kreis, eine Strecke, ein Dreieck, ein Polygon, ein dreidimensionaler Körper, wie eine Pyramide oder ein Quader.

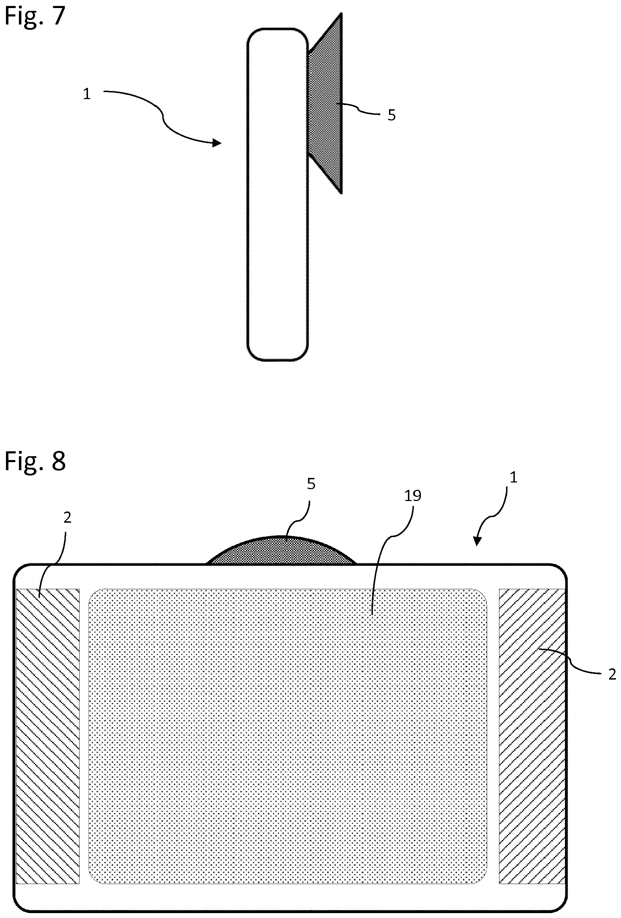

Eine alternative Ausführung eines erfindungsgemäßen Messgeräts 1 ist in Fig. 7 und Fig. 8 gezeigt. Das Messgerät 1 besitzt hier ein im Wesentlichen quaderförmiges Gehäuse in dem eine Kamera 5 angeordnet ist. An den beiden Seiten besitzt das Messgerät 1 jeweils einen Griffbereich 2, an dem das Messgerät 1 gehalten werden kann. Zwischen den Griffbereichen ist ein großes Display 19 angeordnet, auf dem das erstellte Modell darstellbar ist. Neben den hier gezeigten beispielhaften Ausführungen kann ein erfindungsgemäßes Messgerät viele weitere unterschiedliche Ausgestaltungen aufweisen, weshalb die Erfindung in keiner Weise auf die dargestellten Formen beschränkt ist.

Die Erfindung betrifft ein Messgerät 1 zur Messung wenigstens einer geometrischen Größe h und ein korrespondierendes Messverfahren. Das Messgerät 1 ist vorzugsweise als Handgerät zum Erstellen eines Aufmaßes eines Untersuchungsobjekts 3 ausgebildet. Das erfindungsgemäße Messverfahren zeichnet sich dadurch aus, dass aus einer, vorzugsweise mit einer Kamera 5 aufgenommenen Bilderfolge sowohl robuste Merkmale 9 als auch hiervon regelmäßige zu unterscheidende präzise Merkmale 13 detektiert werden, so dass ein robustes 3D-Modell erstellt wird und präzise Informationen über die zu messende geometrische Größe h berechnet werden.

### Bezugszeichenliste

- 1: Messgerät
- 2: Griffbereich
- 3: Untersuchungsobjekt
- 4: Kopf von 1
- 5: Kamera
- 6: Fuß von 1
- 7: Datenverarbeitungseinrichtung
- 9: robustes Merkmal
- 10: Fenster
- 11: Bildbereich
- 12: Hausfassade
- 13: präzises Merkmal
- 15: Auswahlmittel
- 17: Energieversorgungseinheit
- 19: Display
- 21: geometrisches Objekt
- 23: Skalierungseinheit
- 25: Punktmerkmal
- 27: Linienmerkmal
- 100: Initialisierung
- 101: Bildaufnahme
- 102: Detektion robuster Merkmale
- 103: Generierung eines 3D-Modells
- 104: Detektion präziser Merkmale
- 105: Zuordnung der präzisen Merkmale
- 106: Auswahl von präzisen Merkmalen
- 107: Berechnung einer geometrischen Größe
- 108: Verfahrensende

## Patentansprüche

1. Messgerät (1) zur Messung wenigstens einer geometrischen Größe eines Untersuchungsobjektes (3), mit einer Kamera (5) zu einer Aufnahme einer Folge von Bildern des Untersuchungsobjektes (3), und einer Datenverarbeitungseinrichtung (7), die zu einer computergestützten Detektion von robusten Merkmalen (9) mittels einer Merkmalserkennung aus den Bildern der Folge, wobei die robusten Merkmale (9) zu einer Identifikation von inhaltlich korrespondierenden Bildbereichen (11) zwischen den Bildern der Folge geeignet sind, und zu einer computergestützten Identifikation von korrespondierenden Bildbereichen (11) zwischen den Bildern mittels der detektierten robusten Merkmale (9) und computergestützten Generierung eines 3D-Modells aus dem Ergebnis der Identifikation eingerichtet ist, **dadurch gekennzeichnet, dass** die Datenverarbeitungseinrichtung zu einer computergestützten Detektion von präzisen Merkmalen (13) mittels einer Ecken- und/oder Kantendetektion aus den Bildern der Folge eingerichtet ist, dass Auswahlmittel (15) zu einer Auswahl eines Satzes von präzisen Merkmalen (13) ausgebildet sind und dass die Datenverarbeitungseinrichtung (7) zu einer computergestützten Berechnung der geometrischen Größe (h) aus dem Satz von präzisen Merkmalen (13) in dem 3D-Modell eingerichtet ist.

2. Messgerät nach Anspruch 1, **dadurch gekennzeichnet, dass** die Detektion der präzisen Merkmale aus Kantendetektion, insbesondere Geraden- oder Streckendetektion, und anschließender Schnittpunktberechnung erfolgt.

3. Messgerät nach Anspruch 1 oder 2, **dadurch gekennzeichnet, dass** das Messgerät (1) als Handgerät mit integrierter Kamera (5) und/oder integrierter Datenverarbeitungseinrichtung (7) ausgebildet ist, insbesondere wobei eine Energieversorgungseinheit (17) für die Kamera (5) und/oder für die Datenverarbeitungseinrichtung (7) integriert ist.

4. Messgerät nach einem der vorangehenden Ansprüche, **dadurch gekennzeichnet, dass** die Datenverarbeitungseinrichtung (7) zu einer Berechnung von 3D-Koordinaten im 3D-Modell zumindest für den Satz von präzisen Merkmalen (13) eingerichtet ist und/oder dass die Auswahlmittel (15) zu einer Ausgabe der extrahierten präzisen Merkmale (13) für einen Benutzer eingerichtet sind, insbesondere wobei die Auswahlmittel (15) ein vorzugsweise berührempfindliches Display (19), vorzugsweise mit einem steuerbaren Cursor, aufweisen.

5. Messgerät nach einem der vorangehenden Ansprüche, **dadurch gekennzeichnet, dass** die Datenverarbeitungseinrichtung (7) zu einer Einpassung eines geometrischen Objekts (21) in die 3D-Koordinaten des Satzes von präzisen Merkmalen (13) für die Berechnung der geometrischen Größe (h) eingerichtet ist, insbesondere wobei die Datenverarbeitungseinrichtung (7) zu einer Ermittlung und Ausgabe von geeigneten geometrischen Objekten (21) computergestützt zur Auswahl eingerichtet ist.

6. Messgerät nach dem vorangehenden Anspruch, **dadurch gekennzeichnet, dass** die Datenverarbeitungseinrichtung (7) zur Auswertung eines Ungenauigkeitsmaßes, insbesondere eines Abstandsmaßes, von dem eingepassten geometrischen Objekt (21) und den 3D-Koordinaten des Satzes von präzisen Merkmalen (13) eingerichtet ist und zudem eingerichtet ist zur Abgabe einer Warninformation und/oder zur automatischen Einpassung eines alternativen geometrischen Objekts (21), wenn das ausgewertete Ungenauigkeitsmaß einen Grenzwert überschreitet.

7. Messgerät nach einem der vorangehenden Ansprüche, **dadurch gekennzeichnet, dass** die Datenverarbeitungseinrichtung (7) zu einer Extraktion von Deskriptoren für die robusten Merkmale (9) zur Identifikation der korrespondierenden Bildbereiche (11) eingerichtet ist.

8. Messgerät nach einem der vorangehenden Ansprüche, **dadurch gekennzeichnet, dass** die Datenverarbeitungseinrichtung (7) zu einer Registrierung der Bilder der Folge und/oder zu einer Anwendung eines Structure-from-Motion-Verfahrens auf die Bilder der Folge für die Generierung des 3D-Modells eingerichtet ist.

9. Messgerät nach einem der vorangehenden Ansprüche, **dadurch gekennzeichnet, dass** die Datenverarbeitungseinrichtung (7) zu einer Extraktion von Deskriptoren der präzisen Merkmale (13) für die Berechnung der 3D-Koordinaten des Satzes von präzisen Merkmalen (13) eingerichtet ist.

10. Messgerät nach einem der vorangehenden Ansprüche, **dadurch gekennzeichnet, dass** die Datenverarbeitungseinrichtung (7) zu einer Berechnung der 3D-Koordinaten anhand von fotometrischen Ähnlichkeiten der präzisen Merkmale (13) zwischen den Bildern der Folge eingerichtet ist, insbesondere anhand von Deskriptoren der präzisen Merkmale (13).

11. Messgerät nach einem der vorangehenden Ansprüche, **dadurch gekennzeichnet, dass** die Datenverarbeitungseinrichtung (7) zu einer subpixelgenauen Berechnung der 2D-Koordinaten der präzisen Merkmale in den Bildern eingerichtet ist.

12. Messgerät nach einem der vorangehenden Ansprüche, **dadurch gekennzeichnet, dass** eine Skalierungseinheit (23) zu einer Skalierung des 3D-Modells durch Auswertung eines in den Bildern der Folge aufgenommenen Referenzobjekts und/oder durch wenigstens eine Abstandsmessung zum Untersuchungsobjekt (3) eingerichtet ist.

13. Messverfahren zur Messung wenigstens einer geometrischen Größe (h) an einem Untersuchungsobjekt (3), mit den Schritten
- Aufnahme einer Folge von Bildern des Untersuchungsobjekts (3),
- computergestützte Detektion von robusten Merkmalen (9) mittels einer Merkmalserkennung aus den Bildern der Folge, wobei die robusten Merkmale (9) zu einer Identifikation von inhaltlich korrespondierenden Bildbereichen (11) zwischen den Bildern der Folge geeignet sind,
- computergestützte Identifikation von korrespondierenden Bildbereichen (11) zwischen den Bildern mittels der extrahierten robusten Merkmale (9) und computergestützte Generierung eines 3D-Modells aus dem Ergebnis der Identifikation,
**gekennzeichnet durch** die weiteren Schritte
- computergestützte Detektion von präzisen Merkmalen (13) mittels einer Ecken- und/oder Kantendetektion aus den Bildern der Folge,
- Auswahl eines Satzes von präzisen Merkmalen (13) und
- computergestützte Berechnung der geometrischen Größe (h) aus dem Satz von präzisen Merkmalen (13) in dem 3D-Modell.

14. Messverfahren nach Anspruch 13, **dadurch gekennzeichnet, dass** die präzisen Merkmale (13) als Schnittpunkte von Kanten einer Kantendetektion, insbesondere Geraden- oder Streckendetektion, ermittelt werden.

15. Messverfahren nach Anspruch 13 oder 14, **dadurch gekennzeichnet, dass** zumindest für den Satz von präzisen Merkmalen (13) zugehörige 3D-Koordinaten im 3D-Modell computergestützt berechnet werden und/oder dass die detektierten präzisen Merkmale (13) für einen Benutzer zur Auswahl ausgegeben werden.

16. Messverfahren nach einem der Ansprüche 13 bis 15, **dadurch gekennzeichnet, dass** zur Berechnung der geometrischen Größe (h) ein geometrisches Objekt (21) in die 3D-Koordinaten des Satzes von präzisen Merkmalen (13) computergestützt eingepasst wird, insbesondere wobei geeignete geometrische Objekte (21) computergestützt ermittelt und einem Benutzer zur Auswahl angeboten werden

17. Messverfahren nach einem der Ansprüche 13 bis 16, **dadurch gekennzeichnet, dass** ein Ungenauigkeitsmaß, insbesondere ein Abstandsmaß, von dem eingepassten geometrischen Objekt (21) und den 3D-Koordinaten des Satzes von präzisen Merkmalen (13) ausgewertet wird, insbesondere wobei eine Warninformation abgegeben wird oder automatisch ein alternatives geometrisches Objekt (21) eingepasst wird, wenn das ausgewertete Ungenauigkeitsmaß einen Grenzwert überschreitet.

18. Messverfahren nach einem der Ansprüche 13 bis 17, **dadurch gekennzeichnet, dass** zur Identifikation der korrespondierenden Bildbereiche (11) Deskriptoren für die robusten Merkmale (9) computergestützt extrahiert werden.

19. Messverfahren nach einem der Ansprüche 13 bis 18, **dadurch gekennzeichnet, dass** zur Generierung des 3D-Modells die Bilder der Folge computergestützt in Registrierung gebracht werden und/oder ein computergestütztes Structure-from-Motion-Verfahren auf die Bilder der Folge angewendet wird.

20. Messverfahren nach einem der Ansprüche 13 bis 19, **dadurch gekennzeichnet, dass** zur Berechnung der 3D-Koordinaten des Satzes von präzisen Merkmalen (13) Deskriptoren der präzisen Merkmale (13) computergestützt extrahiert werden.

21. Messverfahren nach einem der Ansprüche 13 bis 20, **dadurch gekennzeichnet, dass** die 3D-Koordinaten anhand von fotometrischen Ähnlichkeiten der präzisen Merkmale (13) zwischen den Bildern der Folge berechnet werden, insbesondere anhand von Deskriptoren der präzisen Merkmale (13) .

22. Messverfahren nach einem der Ansprüche 13 bis 21, **dadurch gekennzeichnet, dass** die 3D-Koordinaten subpixelgenau berechnet werden.

23. Messverfahren nach einem der Ansprüche 13 bis 22, **dadurch gekennzeichnet, dass** als präzise Merkmale (13) Punktmerkmale (25) und/oder Linienmerkmale (27) verwendet werden.

24. Messverfahren nach einem der Ansprüche 13 bis 23, **dadurch gekennzeichnet, dass** eine Skalierung des 3D-Modells durch Auswertung eines in den Bildern der Folge aufgenommenen Referenzobjekts und/oder durch wenigstens eine Abstandsmessung zum Untersuchungsobjekt (3) computergestützt berechnet wird.
